# EUROPEAN PATENT APPLICATION

(11) **EP 1 810 873 A1**
(43) Date of publication of application: **25.07.2007**
(21) Application number: 06380020.5
(22) Date of filing: 23.01.2006
(51) Int. Cl.: B60N 2/30

(54) **Folding seat for vehicles**

(71) Applicant: Viza Automocion, S.A.U., 36400 Porriño - Pontevedra (ES)
(72) Inventor: Alvarez Vazquez, German, 36210 Vigo - Ponteverda (ES); Canosa Carril, Mauricio, 36001 Pontevedra (ES); Regueiro Blanco, Agustin, 15008 A Coruña (ES)
(74) Representative: Carvajal y Urquijo, Isabel

(57) **Abstract**

The present invention relates to a folding seat for vehicles, including a cushion and a backrest which can move from a use position up to a non-functional position and including as many anchoring mechanisms (1-2) in the use position. Said anchoring mechanisms are connected to as many actuation cables, which when pulled cause the release of said mechanisms. The cable (9) of the cushion anchoring mechanism is connected at its free end to an actuation control (10). The backrest anchoring mechanism (2) is linked to the cushion anchoring mechanism (1) by means of a cable (11).

With this arrangement the successive movement of the cushion and backrest from the use position to the non-functional position is achieved automatically by acting on the actuation control (10).

## Description

The present invention relates to a folding seat for vehicles, and more specifically to a rear seat for automotive vehicles.

In automotive vehicles it is usual that the rear seats can be folded in order to increase loading space, located behind said seats, a space which may be defined by the trunk.

In order to achieve the aim set forth, folding seats are already known in which the cushion and the backrest forming the seat are independently folding. To this end, the cushion is assembled on a seat base, with respect to which it can be moved from the use position to a non-functional position, in which it is located in front of said seat base, in an almost vertical position, immediately behind the front seat. For its part, the backrest is hinged on its lower portion to the seat base and can be folded by means of a use position up to a position in which it is folded towards the front, in which position it remains in an almost horizontal position on the space occupied by the cushion, defined by the seat base.

Both the cushion and the backrest are provided with locking mechanisms that assure the use position of both components. These mechanisms can be manually actuated in order to achieve their unlocking and thus the release of the seat and the backrest, from which situation the cushion and the backrest may be manually pushed until they reach the non-functional position.

In order to carry out these operations one must place oneself close to the seat, in order to access the release levers of the seat and backrest locking mechanisms and to then be able to manually act upon said cushion and backrest, in order to move them to the non-functional position.

All these operations are generally uncomfortable and slow and they require the direct actuation of the user, both on the locking mechanisms and on the seat components.

The same situation occurs with the headrest, in the case of retractable headrests, in which selecting the retracted and use positions must be performed in a completely manual manner.

The present invention has as an object to solve all the problems set forth, providing the cushion and the backrest of a folding seat with mechanisms that cause automatic movement of said cushion and backrest to the non-functional position when the locking mechanism is released.

Another object of the invention is to provide the cushion and backrest locking mechanism with an unlocking system that may be activated in a joint manner and all this from a single control, which may be located on the seat itself, for example on the backrest, or at a distance, for example in the trunk, at a point that is accessible from the driver's position, etc.

Another object of the invention is to achieve that in the event the seats have retractable headrests, the passage from the use position to the retracted position may be achieved automatically, by means of actuating the release lever of the cushion and backrest locking mechanisms.

In order to achieve the objects set forth, the anchoring mechanisms for anchoring the cushion and backrest are connected to as many actuation cables, and by means of pulling on them these mechanisms are released. The cable of the cushion anchoring mechanism is connected to an actuation control that can be located at any point of the seat or at a distance from it, for example in the trunk, at a point that is accessible from the driver's seat, etc. For its part, the cable of the backrest anchoring mechanism is connected to the cushion anchoring mechanism in order to be pulled by the latter when said cushion anchoring mechanism is released.

The cushion anchoring mechanism comprises means for guiding the cushion in its movement between the use position and the non-functional position, a locking element for locking these means in the use position of the cushion, to which the aforementioned actuation cable will be connected, a spring constantly driving said means towards the non-functional position of the cushion, and a pulling control of the actuation cable of the backrest anchoring mechanism, a control that is actuated by the cushion movement guiding means when said means are close to the non-functional position of said cushion.

With the constitution set forth, by acting upon the actuation control of the cable that is connected to the cushion anchoring mechanism, the locking element of the means responsible for guiding the cushion towards the non-functional position is acted upon, a position towards which it is driven by the spring of the anchoring mechanism. When the cushion movement means are close to the non-functional position of the cushion, they act upon the pulling control of the actuation cable of this backrest anchoring mechanism, leading to the release thereof.

The backrest anchoring mechanisms comprise a locking latch, which connects to the actuation cable originating from the cushion anchoring mechanism and which latch will be moved towards the unlocking position when the means for guiding the cushion in its movement are close to the non-functional position of said cushion. The backrest anchoring mechanism further comprises a spring constantly drives said backrest towards the non-functional position and which will act at the time in which the locking latch unlocks the anchoring mechanism of said backrest due to its being pulled by the corresponding cable.

The means for guiding the cushion in its movement between the use position and the non-functional position comprise two parallel connecting rods and a constant length tensioner. The connecting rods are hinged on one end to a support that is integral with the seat base and on the other end to a support that is integral with the cushion. The tensioner consists in a cable that is fixed at its ends to the supports between which each connecting rod is assembled, such that it limits the separation between said supports, in order to cooperate in guiding the cushion in its movement between the use position and the non-functional position. The connecting rods swivel between these positions describing an angle close to 180°, between a folded position and an unfolded position. In the folded position the hinging point of the connecting rod with the cushion support is located behind the hinging point with the support that is integral with the base, the cushion being in its use position. When the connecting rods are in the unfolded position the hinging point with the cushion support is in front of the hinging point with the support that is fixed to the base and the cushion will be in the non-furtctional position.

The locking elements of the cushion guiding means are formed by a latch that is assembled on the connecting rod hinge support that is integral with the seat base. This latch is connected on one side to the actuation cable which originates from the aforementioned control, whereas on the other side it is opposite to and can be introduced into an opening in the connecting rod, when the cushion is in the use position. The latch is constantly driven towards the connecting rod by means of a spring, such that when the cushion is in its use position and the latch is opposite the opening in the connecting rod, it is automatically introduced into said opening and the assembly is locked in this use position of the cushion.

The spring by means of which the cushion guiding means are driven towards the non-functional position thereof may be formed by a gas spring, which is hingedly connected at one end to the connecting rod, at an intermediate point between the hinging points of said connecting rod with the supports, and on the end opposite to the hinging support hinging the connecting rod with the seat base.

As regards the pulling control of the actuation cable of the backrest anchoring mechanism, it is formed by a rotating cam, with a slightly helical profile, which is assembled on the hinging support which hinges the cams to the seat base. This cam is supplemented with a toggle button that is assembled on the connecting rod and which carries the cam when said connecting rod is close to the unfolded position. Both the cam and the button are driven towards a non-functional resting position by means of as many springs.

With the constitution set forth, when acting through a single actuation control, movement of the cushion to the non-functional position and then swivelling of the backrest also towards its non-functional position is automatically achieved, the seat as a whole remaining folded.

An automatic headrest retraction or hiding mechanism can also be acted upon through the same control, in case the backrest is provided with a retractable headrest.

In order to reposition the backrest and the cushion in their use position from the non-functional position, the backrest is manually raised until the locking mechanism thereof is locked, and then the cushion is moved, also to its use position until the corresponding anchoring mechanism is also locked, the seat as a whole being arranged for carrying out its automatic folding again, whenever necessary.

The constitution of the folding seat of the invention and the operation thereof will be better understood with the following description, made with reference to the attached drawings, in which a non-limiting embodiment is shown.

In the drawings:
Figure 1 shows a perspective view of all the cushion and backrest anchoring mechanisms of two rear seats of an automotive vehicle.
Figure 2 shows a schematic side elevational view of the kinematics for the entire seat, with successive seat and backrest positions from the use position to the non-functional position.
Figure 3 shows a schematic sectional view of the actuation mechanism for the seat anchoring mechanism.
Figure 4 shows a perspective view of all the means guiding the cushion in its movement between the use position and the non-functional position.
Figure 5 shows a view similar to Figure 4, in which the spring and the support connecting the cushion anchoring mechanism to the cushion have been eliminated.
Figure 6 shows a longitudinal section of the mechanism in Figure 5, in different cushion movement positions from its use position to its non-functional position.
Figure 7 shows a detail of Figure 6, showing the mechanism in the final non-functional position of the cushion.
Figure 8 shows a view similar to that of Figure 6, showing the different positions of the cushion anchoring mechanism in its movement from the non-functional position of the cushion to the use position of the cushion.
Figure 9 shows a longitudinal section of the latch forming the locking element of the cushion anchoring mechanism in the anchoring position.
Figure 10 shows a view similar to that of Figure 9, with the latch in the cushion anchoring mechanism unlock or release position.
Figure 11 shows a side elevational view of the backrest frame, with the locking mechanism thereof.
Figure 12 shows a partial perspective view of the latch that is part of the backrest anchoring mechanism.
Figure 13 shows a view similar to that of Figure 12, with the lock in the backrest anchoring mechanism lock position.
Figure 14 shows a sectional view of the latch in Figure 13 in its lock position.
Figure 15 shows a view similar to that of Figure 14, with the latch unlocked.

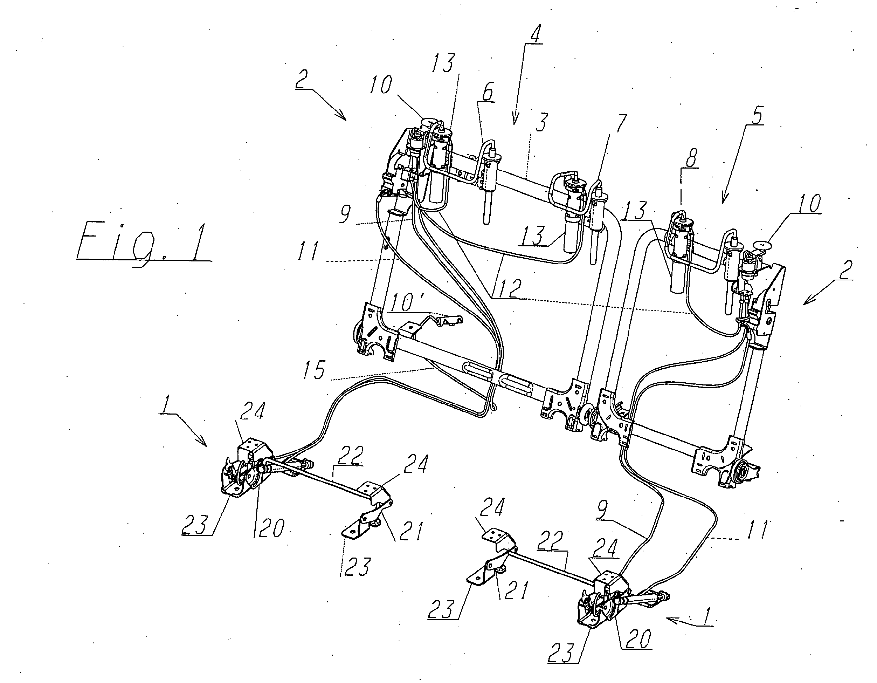

Figure 1 shows a perspective view of the seat anchoring mechanism 1 and the backrest anchoring mechanism 2, including the frame 3 thereof, which corresponds to two rear seats of a vehicle with different widths, the wider one generally indicated with reference number 4 and the narrower one referenced with number 5, the backrest of the wider seat 4 further including two headrests, the frames of which are referenced with numbers 6 and 7, whereas the backrest of the narrower seat 5 includes a single headrest 8. The corresponding cushion frame will be fixed on the cushion anchoring mechanism 1.

The cushion anchoring mechanism 1 for each seat is connected to a cable 9 which on its end is linked to an actuation control 10. For its part, the backrest anchoring mechanism 2 is connected to a cable 11 that is linked on the other end to the cushion anchoring mechanism 1. Apart from the control 10, cables 12 can also be provided for actuating the headrest release mechanisms 13 assembled on the corresponding seat backrest, if has such means.

The actuation control 10 can be located for example on the backrest of the corresponding seat or rather at a point that is separate or distant from the seat, by means of a control 10' that can be located in the trunk, dashboard, etc- and which will actuate upon the assembly of the control 10 through a cable 15.

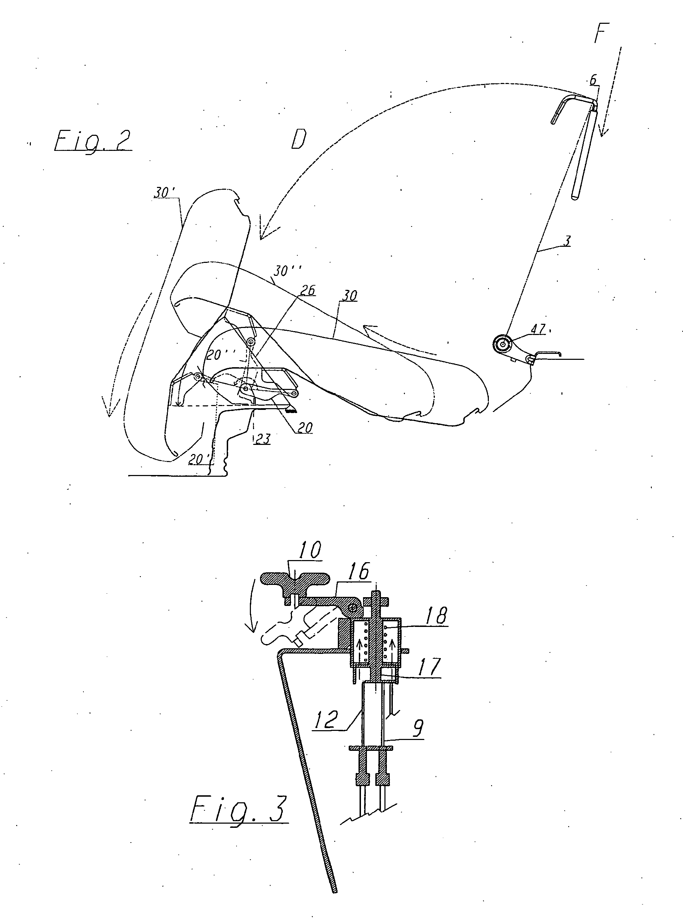

Figure 3 shows a possible embodiment of the control 10 that includes an actuation lever 16, by the actuation of which the pin 17 can be moved upwards, compressing the spring 18, and therefore pulling the cables 9 and 12 that originate from it.

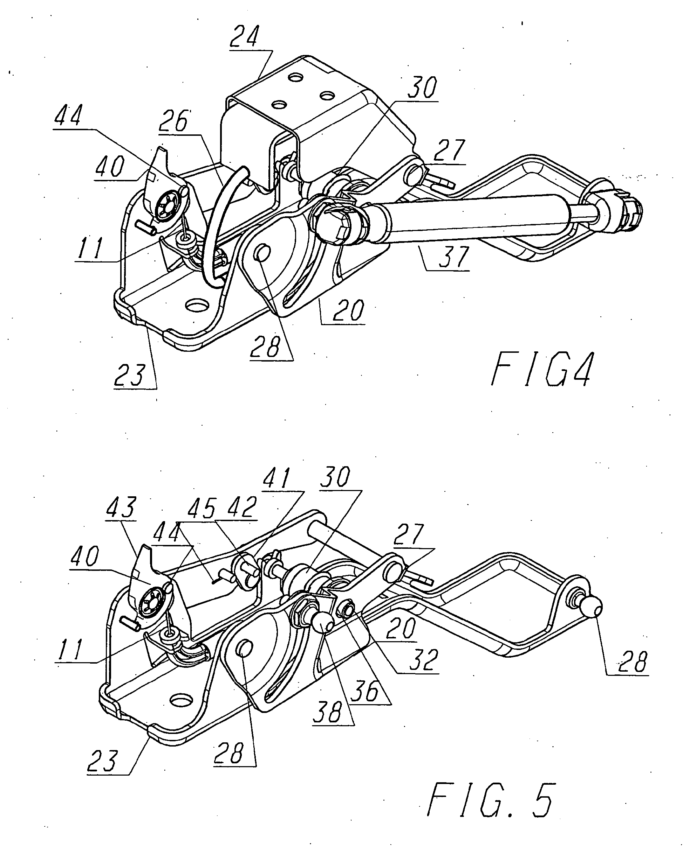

The cushion anchoring mechanism 1, as well as its operating system is explained below with respect to Figures 4 to 8.

This cushion anchoring mechanism includes means for guiding said cushion in its movement between the use position and the non-functional position, said means being formed by two parallel connecting rods 20 and 21 for each seat, as shown in Figure 1, which are connected to one another by an intermediate bar 22. These connecting rods are hinged on one end to a support 23 that is integral with the seat base, and on the other end to a support 24 that the cushion frame will be fixed to.

Furthermore, support 24 is linked with support 23 through a constant length tensioner, formed by a cable 26.

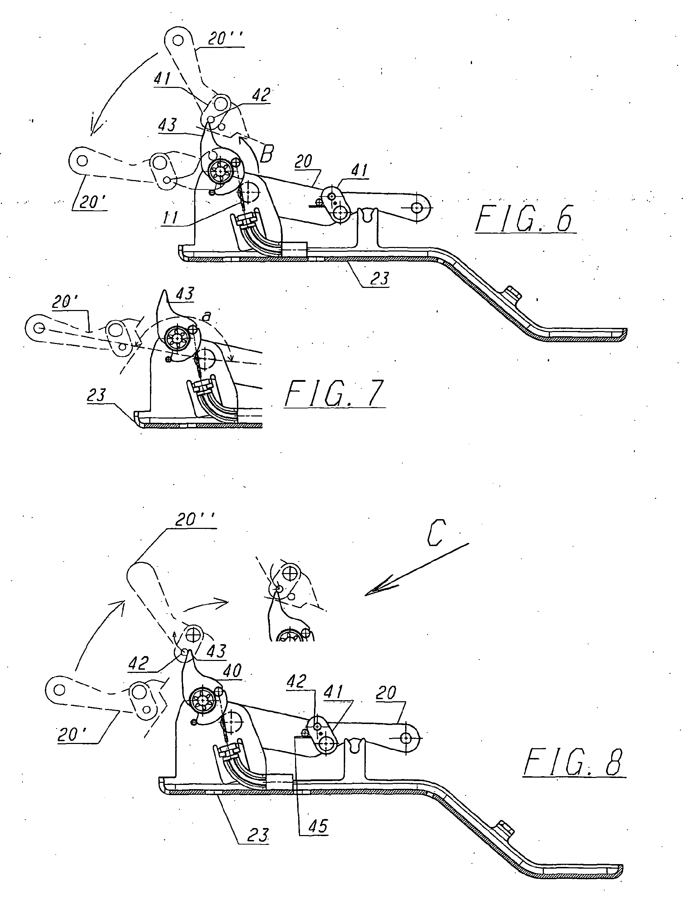

The connecting rod 20, as can best be seen in Figures 6 and 7, can swivel in an angle close to 180° between a folded position, with reference number 20 and represented by means of a continuous line, and an unfolded position, with reference number 20' and represented with a dashed line. In the folded position 20, which is that shown in Figure 4, the hinging point 27 between the connecting rod 20 and the support 24 with the cushion is behind the hinging point 28 with the support 23 that is integral with the seat base.

As represented in Figure 2, in the first folding position of the connecting rod 20, the cushion 30 is in the use position, whereas in the unfolded position 20' of the connecting rod, the cushion is in the non-functional position 30'. When passing from one position to another, the tension cable 21 is completely tightened, aiding in the movement of the cushion 30, as will be explained below.

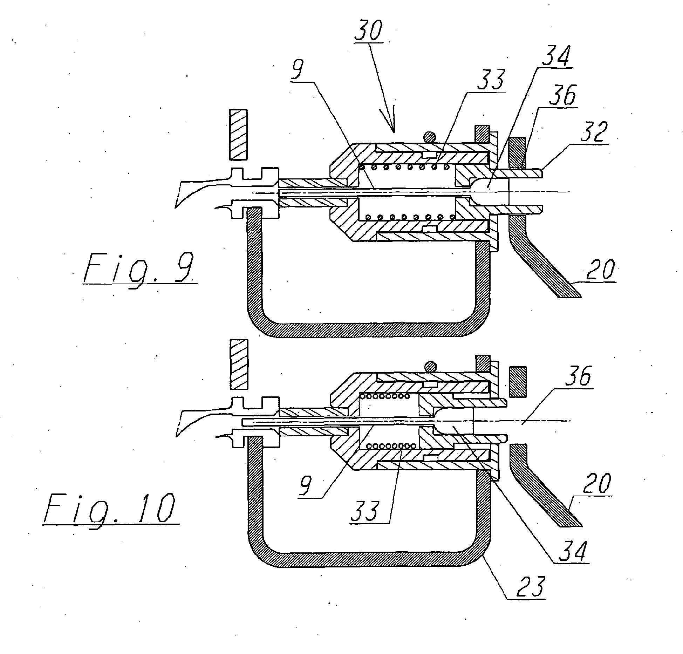

The seat anchoring mechanism 1 further includes a locking element 30 which, as can best be seen in Figures 9 and 10, is made up of a latch 32 that is constantly driven towards an extracted position shown in Figure 9 by means of spring 33. The latch 32 is linked to the cable 9 that comes from the actuation control 10, Figure 1, by means of the flaring 34. When pulling this cable 31, the latch 32 is dragged to the retracted position shown in Figure 2, in which the spring 33 is compressed. As can be seen in Figure 5, the connecting rod 20 has an opening 36 that is opposite to the latch 32 of the locking element 30 when said connecting rod 20 is in the folded position. In this situation, the head 32 will enter the opening 36, as can be seen in Figures 5 and 9, driven by the spring 33. When pulling the cable 9, the latch 32 will occupy its retracted position, outside the opening 36, the connecting rod 20 thus being free to swivel.

As can be seen in Figure 4, connected to the connecting rod 20 there is a gas spring 37 which constantly drives the connecting rod 20 towards the unfolded position 20' of Figures 2 and 7. The spring 37 is hinged to the connecting rod 20 through the ball joint 38, located at an intermediate point between hinging points 27 and 28 of the connecting rod. On the opposite end the spring 37 is hinged to the ball joint 39 of the support 23 that is anchored to the seat base.

By means of spring 27, as soon as the head of the latch 30 passes to the retracted position of Figure 10, the connecting rod 20 is driven towards the unfolded position 20' of Figures 2 and 7.

The cushion anchoring mechanism 1 further includes, as can best be seen in Figure 5, a pulling control of the actuation cable 11 of the backrest anchoring mechanism 2. This control is formed by a rotating cam 40 that is assembled on the support 23, and by a toggle button 41 that is assembled on the connecting rod 20. Figure 5 shows the cam 40 and the button 41 in the position they are in when the connecting rod 20 is in its folded position, corresponding to the seat use position. When the connecting rod 20 is released by the locking element 30, as can be seen in Figure 6, the button 41 acts, through the pivot 42, on elongation 43, forcing it to rotate in the direction of arrow B in Figure 6, dragging it and therefore pulling the cable 11 that is anchored to a point of said cam, for example by means of a pin 44. Pulling of the cable 11 will cause the release of the backrest anchoring mechanism, as will be explained below. When the cam 20 surpasses an intermediate position 20" in its swivelling and reaches an unfolded limit position 20', the pivot 42 of the button 41 is released, said connecting rod recovering position 43 due to the action of a recovery spring. From the position in Figure 7 and as shown in Figure 8, the connecting rod can pass from position 20' to intermediate position 20" in which it rests against the extension 43 of the cam 40, until it surpasses the end of said extension, as shown in detail C of Figure 8, thus allowing again reaching position 20 in which it will be anchored by the locking element or latch 30.

The button 41 will swivel slightly when the connecting rod 20 successively passes through the different positions described, recovering its original position 41 as long as it does not rest on the projection 43 of the cam 40, due to the effect of a recovery spring 45.

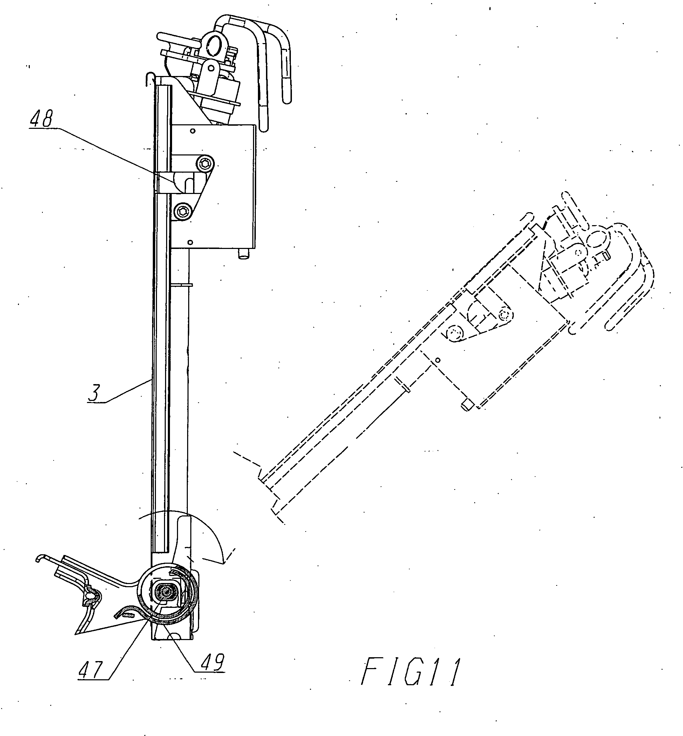

As can be seen in Figures 1 and 11, the backrest frame 3 is hinged at its lower portion to the seat base according to a hinge pin 47. The backrest anchoring mechanism for anchoring the backrest in its use position includes a locking element 48 that is connected to the cable 11 that is connected to the cam 40 of the cushion anchoring mechanism, Figure 4, and a spring 49 that constantly drives said backrest towards its non-functional position.

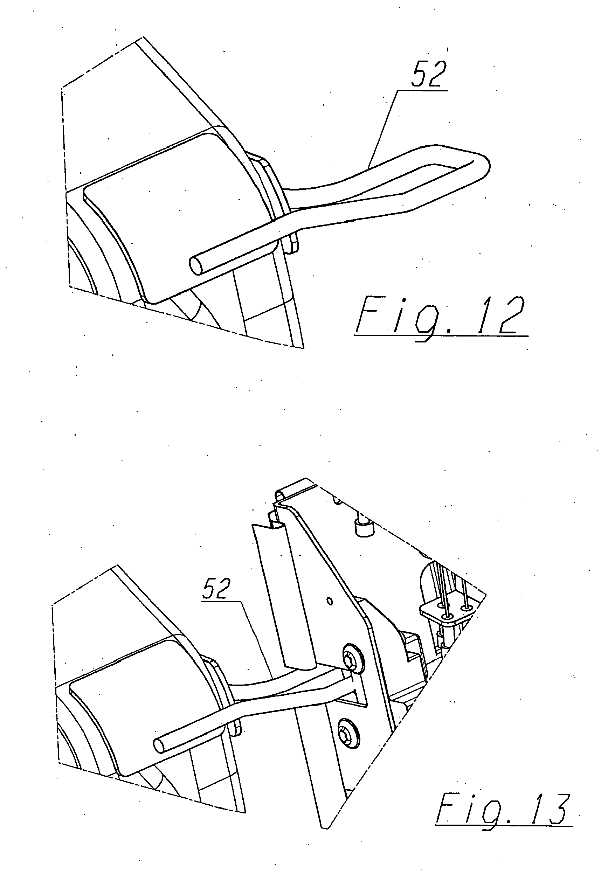

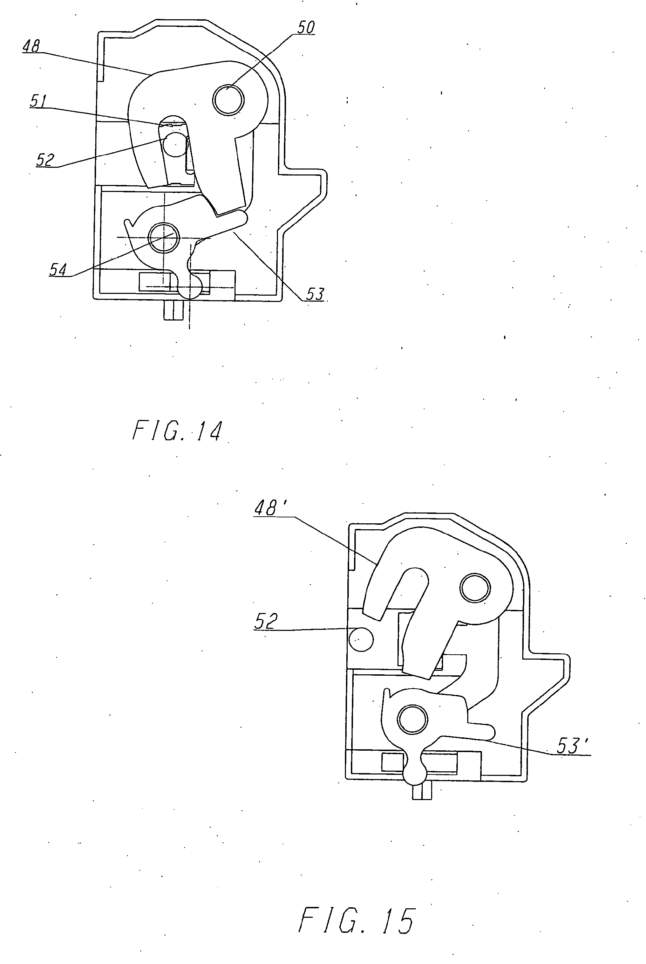

The locking element 48, as can best be seen in Figures 14 and 15, is formed by a swivelling part which swivels about a shaft 50, which has a notch 51 that is capable of bracing the hook 52, Figures 12 and 13, integral with the vehicle structure. The swivelling part 48 can occupy the locking position of Figure 14 or the unlocking position of Figure 15, with reference number 48', in which the hook 52 is released. The locking position of Figure 5 is assured by means of the latch 53, which can be partially rotated about the shaft 54. This latch is connected to the cable 11 that comes from the cushion anchoring mechanism and which when pulled causes it to rotate from the position in Figure 14 to the position in Figure 15, with reference number 53', in which part 48 is released so that it occupies position 48' by the drive effect created by spring 49, a coil spring internal to the part, not shown.

With the constitution set forth, and as shown in the diagram of Figure 2, when the control 10 is pulled, Figures 1 and 3, by means of cable 9, the latch of the locking element 30 of the seat anchoring mechanism moves from the position in Figure 9 to the position in Figure 10, in which the spring 37 will first cause the cushion 30 to move forward, with a slight elevation thereof, due to the effect of a tensioner 26, occupying position 30", and then its swivelling will start until it is located in position 30'. When reaching this position, the cam 40 of the button 41, as explained in reference to Figure 7, will pull the cable 11, creating the passage of the locking element 48 components of the backrest anchoring mechanism from Figure 14 to Figure 15, in which the backrest, driven by the spring 49, Figure 11, will swivel forward towards the folded position, as indicated with arrow D in Figure 2.

On the other hand, in case the backrest has a retractable headrest 6 with an automatic retraction mechanism, through the corresponding cable 12 of the control 10, Figure 1, first the locking element of the retraction or hiding mechanism 1 will be released so that the headrest moves according to direction F in Figure 2, until it reaches its retracted or hidden position. Secondly, the cushion 30 will slide to position 30", thirdly the cushion will swivel to position 30', and finally as the fourth movement, the backrest will fold until the retracted position, in which it will be located at the place originally occupied by the cushion 30, which corresponds to the seat base.

## Claims

1. A folding seat for vehicles, including a cushion and a backrest which are assembled on a seat base, which cushion can be moved and swivel upon the seat base from a use position to a non-functional position, in second position of which it is located in front of the seat base, in an approximately vertical position, and which backrest is hinged to the seat base and can swivel between a use position and a non-functional position, in the second position of which it is folded upon the seat base, said cushion and backrest including as many anchoring mechanisms in the use position, **characterised in that** the cushion and backrest anchoring mechanisms are connected to as many actuation cables, which when pulled causes the release of said mechanisms, the cable of the cushion anchoring mechanism being linked to an actuation control, whereas the cable of the backrest anchoring mechanism is connected to the cushion mechanism in order to be dragged when said cushion mechanism is released, which cushion anchoring mechanism comprises means for guiding said cushion in its movement between the use position and the non-functional position, a locking element for said means in the use position of the cushion, which is connected to the corresponding actuation cable, a spring driving the aforementioned means towards the non-functional position of the cushion, and a pulling control of the actuation cable of the backrest anchoring mechanism, which control is actuated by the cushion movement guiding means, when said means are close to the non-functional position of the cushion; and which backrest anchoring mechanism comprises a locking element that is connected to the actuation cable which originates from the cushion anchoring mechanism, a hook that is integral with the vehicle bodywork and which can be coupled on said locking element and a spring which constantly drives said backrest towards its non-functional position.

2. A seat according to claim 1, **characterised in that** the means for guiding the cushion in its movement between the use position and the non-functional position comprise two parallel connecting rods and a constant length tensioner, which connecting rods are hinged on one end to a support that is integral with the seat base, and on the opposite end they are hinged to a support that is integral with the cushion; and which tensioner consists in a cable that is fixed on its ends to the supports between which each connecting rod is assembled; the swivelling connecting rods describing an angle close to '180° between the extreme folded and unfolded positions, in the first of which the hinging point of said connecting rod with the cushion support is behind the hinging point with the support that is integral with the base and said cushion is in the use position, whereas in the unfolded position the hinging point with the cushion support is behind the hinging point with the support fixed to the base and the cushion is in the non-functional position.

3. A seat according to claims 1 and 2, **characterised in that** the locking element of the cushion guiding means comprise a latch that is assembled on the hinging support of the connecting rod that is integral with the seat base, which latch is connected on one side to the actuation cable, whereas on the opposite side it is opposite to and can be introduced into an opening in the connecting rod when the cushion is in the use position, said latch being constantly driven towards the connecting rod by means of a spring.

4. A seat according to claim 1, **characterised in that** the spring driving the cushion guiding means towards the non-functional position of said cushion consists in a gas spring connected to the connecting rod at one end, at an intermediate point between the hinging points of said connecting rod with the supports, and at the opposite end on the hinging support of the connecting rod with the seat base.

5. A seat according to claim 1, **characterised in that** the pulling control of the actuation cable of the backrest anchoring mechanism consists in a rotating cam assembled on the hinging support of the connecting rods to the seat base, and in a toggle button that is assembled on the cam and drags the cam when said cam is close to its unfolded position, said cam and button being driven towards a resting non-functional position by means of as many springs,

6. A seat according to claim 1, wherein the locking element of the backrest anchoring mechanism is formed by a swivelling plate and a locking latch, **characterised in that** the latch is connected to the actuation cable that originates from the cushion anchoring mechanism, in order to move said latch from a locking position locking the swivelling part to a release position releasing said part.
